# DEMANDE DE BREVET EUROPEEN

(11) **EP 3 919 893 A1**
(43) Date de publication de la demande: **08.12.2021**
(21) Numéro de dépôt: 21176444.4
(22) Date de dépôt: 28.05.2021
(51) Int. Cl.: G01N 21/65, G01J 3/44

(54) **PROCÉDÉS ET DISPOSITIFS DE DÉTECTION D'UN SIGNAL DE DIFFUSION RAMAN STIMULÉE (SRS) DANS UN ÉCHANTILLON**

(30) Priorité: 05.06.2020 FR 2005917
(71) Demandeur: Lightcore Technologies, 06400 Cannes (FR); Centre National de la Recherche Scientifique, 75794 Paris Cedex 16 (FR); Université d'Aix Marseille, 13284 Marseille Cedex 07 (FR); Ecole Centrale de Marseille, 13451 Marseille, Cedex 20 (FR)
(72) Inventeur: RIGNEAULT, Hervé, 13190 Allauch (FR); HEUKE, Sandro, 13006 Marseille (FR)
(74) Mandataire: Osha Liang

(57) **Abrégé**

Selon un aspect, la présente description concerne un dispositif (200) pour la détection d'un signal optique non linéaire résonant SRS induit dans un échantillon (S). Le dispositif comprend une source lumineuse (210) configurée pour l'émission d'un premier train d'impulsions pompe (202) à une première pulsation (ωₚ) et d'un deuxième train d'impulsions Stokes (203) à une deuxième pulsation Stokes (ωₛ), un premier et un deuxième modulateur en amplitude (231, 232) configurés pour moduler en amplitude respectivement le train d'impulsions pompe à une première fréquence de modulation (fi) et le train d'impulsions Stokes à une deuxième fréquence de modulation (f₂) différente de la première fréquence de modulation. Le dispositif comprend en outre des moyens optomécaniques pour faire interagir dans l'échantillon lesdits trains d'impulsions pompe et Stokes (204, 205) modulés en amplitude, des moyens de détection optique (271, 272) d'un premier et d'un deuxième signal optique non linéaire respectivement à la première pulsation et à la deuxième pulsation, ainsi que des moyens de détection synchrone (281, 282) des premier et deuxième signaux optiques respectivement à ladite deuxième fréquence de modulation (f₂) et à la première fréquence de modulation (fi) permettant d'extraire un premier signal SRL (208) et un deuxième signal SRG (209) caractéristiques de la résonance vibrationnelle moléculaire de l'échantillon.

## Description

### Domaine technique de l'invention

La présente description concerne des dispositifs et des procédés de détection d'un signal optique non linéaire résonant de type diffusion Raman stimulée (ou SRS selon l'abréviation de l'expression anglo-saxonne « *Stimulated Raman Scattering* ») dans un échantillon. Elle s'applique notamment à l'imagerie microscopique, à la spectroscopie et à l'imagerie hyperspectrale dans les milieux diffusants tels que les milieux biologiques.

### Etat de la technique

Toutes les liaisons chimiques possèdent des fréquences de vibration qui leur sont propres. On appelle techniques optiques vibrationnelles des méthodes qui visent à utiliser l'interaction lumière/matière pour obtenir des informations sur ces vibrations moléculaires. La plus connue de ces techniques est la spectroscopie infrarouge (IR) qui observe les raies d'absorption spécifiques des liaisons chimiques présentes dans un échantillon. Découverte en 1928, la diffusion Raman (du nom du physicien Chandrasekhara Venkata Raman qui découvrit l'effet) permet d'utiliser la lumière visible pour accéder au spectre vibrationnel des molécules qui interagissent avec un faisceau lumineux. Dans un processus de diffusion Raman, une onde pompe de pulsation ω_{P} incidente sur une molécule est diffusée inélastiquement en une onde dite Stokes de pulsation ω_{S} et une onde dite anti-Stokes de pulsation ω_{AS}. L'écart en fréquence entre les ondes générées et l'onde pompe dépend de la transition Raman moléculaire (de pulsation Ω_{R}) de telle sorte que ω_{P}-ω_{S}=ω_{AS}-ω_{P}=Ω_{R}. Dans une vision photonique du processus, les ondes Stokes et anti-Stokes correspondent à une absorption à partir respectivement du niveau vibrationnel fondamental ou excité. Le processus générant l'onde anti-Stokes, partant du niveau vibrationnel excité, est beaucoup moins probable que le processus créant l'onde Stokes, qui est la seule observée dans la pratique en spectroscopie Raman spontanée. Une étude fine de la répartition spectrale des ondes Stokes renseigne sur les densités de liaisons chimiques présentes dans l'échantillon. Ce processus spontané de diffusion inélastique est très peu efficace comparé à la fluorescence (les sections efficaces Raman sont de l'ordre de 10⁻³⁰ cm² /molécule, à comparer avec la section efficace d'absorption à 1 photon d'un fluorophore qui atteint 10⁻¹⁶ cm² /molécule).

Les techniques Raman stimulées CARS (pour Coherent Anti-Stokes Raman Scattering) et SRS (pour Stimulated Raman Scattering) sont des processus de diffusion Raman cohérente qui offrent par rapport aux processus de diffusion Raman spontanée un gain d'environ 10⁷.

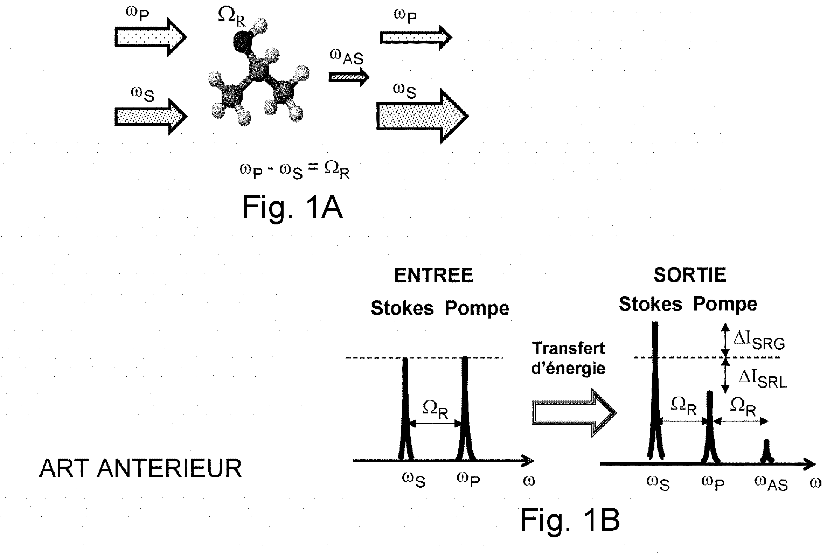

Dans ces techniques (voir Fig. 1A), deux impulsions laser de pulsations ωₚ et ωₛ (ou de fréquences vₚ et vₛ) dont la différence de pulsations est rendue égale à la pulsation Ω_{R} du niveau vibrationnel que l'on veut adresser sont envoyées dans le milieu à analyser. Ces impulsions, dénotées respectivement pompe et Stokes, créent un battement de fréquence qui permet de faire entrer en résonance le mode vibrationnel de pulsation Ω_{R}. Dans le processus CARS dégénéré, cette résonance est sondée par le faisceau pompe qui induit de la diffusion anti-Stokes à la pulsation ω_{AS}.

La diffusion Raman stimulée (SRS) est un processus qui résulte de l'exaltation de la réponse non linéaire due à l'interaction du champ non linéaire induit par les champs pompe et stokes avec le champ excitateur (pompe) et s'observe donc, contrairement au processus CARS, aux mêmes fréquences que les impulsions pompe et Stokes. Il se traduit par un transfert d'énergie du faisceau pompe vers le faisceau Stokes. Ainsi, comme illustré sur la Fig. 1B, la diffusion Raman stimulée couvre deux processus, le processus SRL (abréviation de l'expression anglo-saxonne « *Stimulated Raman Loss* ») et le processus SRG (abréviation de l'expression anglo-saxonne « *Stimulated Raman Gain* ») qui induisent respectivement une perte d'intensité ΔI_{SRL} sur le faisceau pompe et un gain d'intensité ΔI_{SRG} sur le faisceau Stokes. Le processus SRS est décrit par exemple dans l'article de revue de N. Bloembergen *et al.* [Réf. 1]. On montre que la déplétion en intensité ΔI_{SRL} du faisceau pompe et le gain en intensité ΔI_{SRG} du faisceau Stokes sont proportionnels à la partie imaginaire de la susceptibilité non linéaire d'ordre 3 (Im(χ_{R}⁽³⁾)). La mesure de ces quantités permet donc de remonter rigoureusement au spectre Raman. Récemment, les techniques optiques vibrationnelles se sont davantage concentrées sur les techniques SRS qui sont linéaires avec la concentration des espèces chimiques, contrairement aux techniques CARS ; Par ailleurs, les techniques SRS ne sont pas sujet à un fond non résonant toujours présent dans CARS.

La microscopie SRS est une technique récente qui a tiré profit des récentes avancées dans le domaine de la spectroscopie SRS en régime femtoseconde. Cependant, un microscope SRS basé sur un système laser amplifié délivrant des impulsions femtosecondes induit un fort signal SRS mais n'est pas adapté à l'imagerie biologique. En effet, les fortes puissances crêtes mises enjeu (de l'ordre de quelques centaines de nJ ou même du µJ) endommagent les échantillons, et les faibles taux de répétition (1 kHz) sont incompatibles avec la microscopie à balayage rapide.

Il a alors été proposé (voir par exemple l'article de C.W. Freudiger *et al.* [Réf. 2]) un microscope SRS basé sur l'utilisation d'un système laser picoseconde à fort taux de répétition (80 MHz), compatible avec la formation d'images d'échantillons biologiques. En microscopie CARS, le signal utile, c'est-à-dire le signal anti-Stokes, est généré à une fréquence différente des faisceaux excitateurs. Celui-ci peut être détecté par des détecteurs extrêmement sensibles tels que des photodiodes à avalanche ou des tubes photomultiplicateurs. En microscopie SRS, la problématique de détection est différente car le signal utile est généré à la même fréquence que les faisceaux excitateurs. Il s'agit alors de détecter la perte d'énergie du faisceau pompe ΔI_{SRL} ou, indifféremment, le gain en énergie du faisceau Stokes ΔI_{SRG}. En pratique, la perte d'énergie ΔI_{SRL}/I_{P} du faisceau pompe est comprise entre 10⁻⁵ et 10⁻⁸. Dans l'article ci-dessus cité, il est proposé de moduler le signal Stokes à une fréquence donnée et d'extraire la perte du signal de pompe à ladite fréquence par une détection synchrone pour gagner en sensibilité de détection.

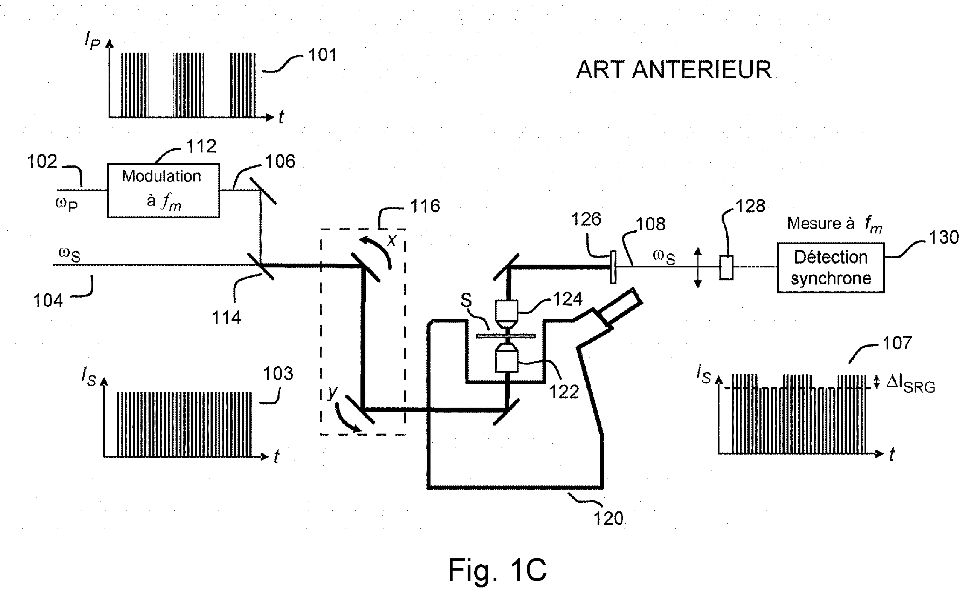

La Fig. 1C représente ainsi un schéma d'un microscope SRS selon l'art antérieur en configuration SRG, c'est-à-dire dans une configuration adaptée à l'extraction du gain du faisceau Stokes. Des trains d'impulsions pompe et Stokes, référencés 102, 104 sur la Fig. 1C, respectivement aux pulsations ωₚ et ω_{S}, sont envoyées sur un échantillon S positionné au foyer d'un objectif de microscope 122 disposé dans le corps d'un microscope 120. Les pulsations ωₚ et ω_{S} sont choisies de telle sorte que la différence des pulsations soit égale à une pulsation Ω_{R} du niveau vibrationnel que l'on veut adresser dans l'échantillon. Les trains d'impulsions pompe et Stokes sont superposés spatialement au moyen d'un combineur 114 et une ligne à retard ajustable (non représentée) est prévue pour assurer la superposition temporelle des impulsions dans l'échantillon. Le train d'impulsions pompe 102 est modulé en amplitude à la fréquence de modulation fₘ au moyen d'un dispositif de modulation 112 pour former un train d'impulsions modulé 106. Afin de réduire le bruit électronique et le bruit du laser, la fréquence de modulation est choisie supérieure à 1 MHz. Sur la Fig. 1C, les courbes 101 et 103 représentent ainsi respectivement l'allure temporelle des intensités lumineuses I_{P} et I_{S} des trains d'impulsions pompe modulé 106 et Stokes 104 (non modulé). Un objectif de collection 124 permet de collecter les signaux optiques résultant de l'interaction des impulsions pompe et Stokes dans l'échantillon. Dans la configuration choisie, un filtre 126 permet de sélectionner le train d'impulsions 108 à la pulsation ω_{S} qui est ensuite envoyé vers un détecteur optique 128, par exemple une photodiode. L'intensité optique mesurée en fonction du temps est représentée schématiquement sur la courbe 107. Une détection synchrone 130 à la fréquence de modulation fₘ permet d'extraire le signal recherché ΔI_{SRG}, caractéristique de la vibration moléculaire à la pulsation Ω_{R}. Un balayage des faisceaux excitateurs 104, 106 dans l'échantillon, par exemple au moyen d'un système de balayage 116 comprenant deux miroirs galvanométriques, permet alors de faire une image de la zone d'intérêt de l'échantillon.

La microscopie SRS est cependant sujette à un certain nombre d'artefacts qui limitent la spécificité chimique car ils introduisent des signaux pouvant être interprétés comme du signal SRS. En particulier, la microscopie SRS est sensible à l'effet Kerr croisé (ou XPM pour « Cross Phase Modulation »), non spécifique des liaisons chimiques ciblées et qui apparaît comme un offset positif ou négatif sur le signal SRS. La microscopie SRS est sensible également à l'absorption à deux photons croisée (ou TPA pour « Two Photons Absorption ») qui apparait comme un offset positif (en configuration SRL) ou négatif (en configuration SRG) sur le signal SRS.

L'article de T. Bremer *et al.* [Réf. 3] décrit un dispositif pour la détection d'un signal optique non linéaire résonant de type Diffusion Raman Stimulée induit dans un échantillon permettant de s'affranchir des artefacts. Dans la méthode décrite dans [Réf.3], des impulsions femtosecondes sont envoyées à basse cadence (1 KHz) et chaque impulsion est façonnée afin de former deux impulsions de même profil en énergie et de même profil spectral (même pulsation) mais décalées temporellement. La première impulsion est envoyée directement sur l'échantillon tandis que la deuxième impulsion traverse une fenêtre générant une dispersion temporelle de l'impulsion. Lorsque la première impulsion est focalisée sur l'échantillon, du fait de la finesse temporelle et de la largeur spectrale de la première impulsion, il y a génération par diffusion Raman stimulée (SRS) d'un signal non-linéaire rétrodiffusé décalé spectralement vers le rouge. La détection au moyen de deux détecteurs des composantes spectrales du signal non linéaire séparées par un miroir dichroïque permet l'acquisition de deux images SRG et SRL. Du fait de la dispersion temporelle, la deuxième impulsion envoyée sur l'échantillon ne génère pas de signal non-linéaire SRS. Le signal rétrodiffusé résultant de l'interaction de la deuxième impulsion dans l'échantillon peut donc être utilisé comme référence et est soustrait au signal non linéaire rétrodiffusé résultant de l'interaction de la première impulsion dans l'échantillon. Du fait du mécanisme employé dans [Réf.3], à savoir la génération d'un signal SRS par la seule première impulsion large bande, le procédé objet de la [Réf.3] est limité par le nombre de fréquences vibrationnelles (ou fréquences de résonance) que l'on peut détecter et ne permet pas par ailleurs de détecter des fréquences vibrationnelles supérieures à 1000 cm⁻¹.

Dans la demande de brevet publiée WO2014154708 [Réf. 4], il est décrit un dispositif mettant en œuvre trois faisceaux excitateurs, à trois pulsations ω₁, ω₂ et ω₃ prédéterminées, dont les interactions deux à deux dans l'échantillon à des première fréquence et deuxième fréquence de modulation permettent de générer à la fois un processus SRL et un processus SRG, le faisceau de pulsation intermédiaire (ω₂) servant alternativement de faisceau pompe ou de faisceau Stokes dans chacun des processus. Par exemple, les trains d'impulsions aux pulsations ω₁ et ω₃ sont modulés en amplitude à la même fréquence de modulation mais en opposition de phase. Une détection synchrone à la ou les fréquence(s) de modulation sur les signaux optiques non linéaires résultant des interactions dans les deux processus permet de s'affranchir au moins partiellement des artefacts et de multiplier par deux le signal utile SRS.

Bien que ce dispositif, du fait de la suppression au moins partielle des artefacts, permette une amélioration substantielle de la qualité du signal utile SRS obtenu par rapport aux dispositifs connus de l'état de l'art, il nécessite trois faisceaux excitateurs à trois pulsations ω₁, ω₂ et ω₃ différentes, entrainant de ce fait un encombrement et une complexité plus grandes du dispositif optique.

La présente description propose une méthode alternative de détection d'un signal optique non linéaire résonant de type SRS induit dans un échantillon, qui permet de détecter les artefacts dans un signal SRS et optionnellement de produire un signal SRS utile affranchi au moins partiellement des artéfacts, comme dans la méthode décrite dans la [Réf. 4], mais en conservant un dispositif avec seulement deux faisceaux excitateurs.

### Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, l'invention concerne un dispositif pour la détection d'un signal optique non linéaire résonant de type Diffusion Raman Stimulée induit dans un échantillon, le dispositif comprenant :
- une source lumineuse configurée pour l'émission d'un premier train d'impulsions pompe à une première pulsation et d'un deuxième train d'impulsions Stokes à une deuxième pulsation telles qu'une différence entre les première et deuxième pulsations est égale à une pulsation de résonance vibrationnelle moléculaire de l'échantillon, les premier et deuxième trains d'impulsions étant synchronisés temporellement;
- un premier modulateur en amplitude configuré pour moduler en amplitude le premier train d'impulsions pompe à une première fréquence de modulation et un deuxième modulateur en amplitude configuré pour moduler en amplitude le deuxième train d'impulsions Stokes à une deuxième fréquence de modulation différente de la première fréquence de modulation ;
- des moyens optomécaniques pour faire interagir dans l'échantillon lesdits trains d'impulsions pompe et Stokes modulés en amplitude ;
- des premiers moyens de détection optique configurés pour la détection optique d'un premier signal optique non linéaire à ladite première pulsation, ledit premier signal optique non linéaire résultant de l'interaction des impulsions lumineuses dans l'échantillon, et des moyens de détection synchrone à ladite deuxième fréquence de modulation permettant d'extraire à partir du premier signal optique non linéaire ainsi détecté un premier signal caractéristiques de la résonance vibrationnelle moléculaire de l'échantillon;
- des deuxièmes moyens de détection optique configurés pour la détection optique d'un deuxième signal optique non linéaire à ladite deuxième pulsation, ledit deuxième signal optique non linéaire résultant de l'interaction des impulsions lumineuses dans l'échantillon, et des moyens de détection synchrone à ladite première fréquence de modulation permettant d'extraire à partir du deuxième signal optique non linéaire ainsi détecté un deuxième signal caractéristiques de la résonance vibrationnelle moléculaire de l'échantillon;
- des moyens de traitement électronique configurés pour comparer lesdits premier et deuxième signaux caractéristiques de la résonance vibrationnelle moléculaire de l'échantillon pour déterminer la présence d'artefacts.

En pratique, le premier signal caractéristique de la résonance vibrationnelle moléculaire de l'échantillon est issu d'un processus SRL puisqu'il est mesuré à la pulsation des impulsions pompe. Il correspond à la déplétion en intensité des impulsions pompe et sera dénommé plus simplement dans la suite de la description « signal SRL ». Le deuxième signal caractéristique de la résonance vibrationnelle moléculaire de l'échantillon est issu d'un processus SRG puisqu'il est mesuré à la pulsation des impulsions Stokes. Il correspond au gain en intensité des impulsions Stokes et sera dénommé plus simplement dans la suite de la description « signal SRG ».

Ce nouveau dispositif permet ainsi, avec seulement deux faisceaux excitateurs (pompe et Stokes) formés respectivement de trains d'impulsions à deux pulsations prédéterminées en fonction de la résonance vibrationnelle moléculaire de l'échantillon que l'on cherche à étudier, de déterminer la présence ou non d'artefacts dans la mesure des signaux SRL et SRG caractéristiques de ladite résonance vibrationnelle moléculaire. En effet, grâce à la modulation en amplitude à des fréquences différentes des trains d'impulsions pompe et Stokes, il est possible avec des moyens de détection adaptés, d'obtenir directement les signaux SRL et SRG. Ces signaux étant normalement tous deux proportionnels à la partie imaginaire de la susceptibilité non linéaire d'ordre 3 (Im(χ_{R}⁽³⁾)), ils devraient être identiques à une constante de proportionnalité près, et leur comparaison permet de détecter des artefacts.

Selon un ou plusieurs exemples de réalisation, lesdites fréquences de modulation sont des radiofréquences, comprises par exemple entre environ 1 MHz et environ 40 MHz.

Selon un ou plusieurs exemples de réalisation, lesdites fréquences de modulation ne sont pas multiples l'une de l'autre. Cette configuration permet d'éviter, lorsque les modulateurs en amplitude ne sont pas parfaits et génèrent des harmoniques de la première et/ou de la deuxième fréquence, qu'il y ait génération de faisceaux pompe et Stokes aux mêmes fréquences.

En pratique, on pourra choisir la première fréquence et la deuxième fréquence de telle sorte à éviter toute interférence avec d'autres radiofréquences d'appareils électroniques du dispositif.

Selon un ou plusieurs exemples de réalisation, les moyens optomécaniques pour faire interagir dans l'échantillon les trains d'impulsions comprennent un élément optique de focalisation des trains d'impulsion dans un volume de focalisation commun, par exemple un objectif de microscope, permettant d'obtenir des densités d'énergie suffisantes dans l'échantillon pour générer les effets optiques non linéaires.

Selon un ou plusieurs exemples de réalisation, le dispositif comprend en outre un élément séparateur configuré pour séparer les premier et deuxième signaux optiques résultant de l'interaction des impulsions lumineuses dans l'échantillon, respectivement aux première et deuxième pulsations.

Selon un ou plusieurs exemples de réalisation, l'élément séparateur permet une séparation spectrale des premier et deuxième signaux optiques et comprend par exemple un élément optique permettant une dispersion spatiale en longueur d'onde, comme par exemple une lame dichroïque, un prisme ou un réseau de diffraction.

Selon un ou plusieurs exemples de réalisation, le dispositif est au moins partiellement fibré. La déposante a montré que la méthode de détection mise en œuvre permettait en outre de détecter des artefacts dus aux effets non linéaires générés dans la fibre.

Selon un ou plusieurs exemples de réalisation, le dispositif selon le premier aspect est configuré pour être utilisé en imagerie vibrationnelle Raman, par exemple en imagerie microscopique. Les moyens optomécaniques pour faire interagir dans l'échantillon lesdits trains d'impulsions pompe et Stokes peuvent alors comprendre des moyens de déplacement relatif du volume de focalisation dans l'échantillon pour procéder à l'imagerie.

Selon un ou plusieurs exemples de réalisation, le dispositif selon le premier aspect est configuré pour être utilisé en spectroscopie Raman. Le dispositif peut comprendre par exemple des moyens de variation des pulsations des trains d'impulsions pompe et/ou Stokes qui interagissent dans l'échantillon, permettant de faire varier la pulsation de résonance vibrationnelle moléculaire de l'échantillon que l'on cherche à étudier.

Selon un ou plusieurs exemples de réalisation, le dispositif selon le premier aspect est configuré pour être utilisé en imagerie hyperspectrale Raman, permettant de réaliser des images SRS de l'échantillon à différentes pulsations de résonance vibrationnelle moléculaire.

Selon un ou plusieurs exemples de réalisation, les premiers et deuxièmes moyens de détection optiques sont configurés pour une détection optique dans un mode de détection avant (ou «*forward*»).

Selon un ou plusieurs exemples de réalisation, les premiers et deuxièmes moyens de détection optiques sont configurés pour une détection optique dans un mode de détection arrière (ou «*epi*»). Le mode « epi » est intéressant notamment pour des échantillons épais/ou faiblement transparents.

Selon un ou plusieurs exemples de réalisation, le dispositif est configuré pour fonctionner en endoscopie. La détection optique se fait alors en mode « *epi* » et le dispositif comprend en outre une fibre optique pour le transport des trains d'impulsions pompe et Stokes vers l'échantillon à étudier et le transport des signaux optiques résultant de l'interaction non linéaire vers des premier et deuxième détecteurs respectivement des premiers et deuxièmes moyens de détection.

Selon un ou plusieurs exemples de réalisation, les premiers et deuxièmes moyens de détection synchrone comprennent chacun une détection synchrone, analogique ou numérique.

Selon un ou plusieurs exemples de réalisation, le dispositif comprend en outre au moins une ligne à retard introduite sur le trajet d'un des premiers ou deuxièmes trains d'impulsions, ladite ligne à retard étant configurée pour introduire un retard temporel entre les premier et deuxième trains d'impulsions. Une ligne à retard permet de s'assurer que les impulsions pompe et Stokes arrivent au même instant sur l'échantillon, rendant ainsi possible l'interaction non linéaire.

Selon un ou plusieurs exemples de réalisation, le retard temporel est variable.

Selon un ou plusieurs exemples de réalisation, les impulsions du premier et/ou du deuxième train d'impulsions sont des impulsions de durées comprises entre environ 1ps et environ 10 ps, par exemple entre environ 1ps et environ 3ps. De telles impulsions sont fines spectralement, centrées respectivement sur les première et deuxième pulsations, avec des largeurs spectrales comprises entre environ 15 cm⁻¹ et environ 5 cm⁻¹. Par exemple, la source lumineuse comprend une source laser picoseconde comprenant un laser maître émettant les trains d'impulsions pompe avec la première pulsation et un oscillateur paramétrique optique (OPO) configuré pour produire, à partir des impulsions pompe émises par le laser maître, les trains d'impulsions Stokes de deuxième pulsation. Cet agencement présente l'avantage que les trains d'impulsions pompe et Stokes sont automatiquement synchronisés. Par ailleurs, il est possible de modifier la pulsation des impulsions Stokes, l'OPO étant accordable.

Selon un autre exemple, la source lumineuse comprend un laser maître et deux OPO, les deux OPO étant configurés pour générer les trains d'impulsions pompe et Stokes à partir d'impulsions émises par le laser maître. Les trains d'impulsions sont là encore automatiquement synchronisés et il est possible de modifier la pulsation des impulsions pompe et des impulsions Stokes, les OPO étant accordables.

Selon un autre exemple, la source lumineuse comprend deux lasers synchronisés générant les trains d'impulsions pompes et Stokes, par exemple un laser Ytterbium et un laser Erbium. Dans ce cas la différence de pulsation est fixe entre les trains d'impulsions pompe et Stokes.

Selon un ou plusieurs exemples de réalisation, les impulsions du premier et/ou du deuxième train d'impulsions sont des impulsions à dérive de fréquence (« *chirpées* ») de pulsations centrées respectivement sur les première et deuxième pulsations.

Par exemple, la source lumineuse comprend une source laser femtoseconde comprenant un laser maître émettant les trains d'impulsions pompe avec la première pulsation, un oscillateur paramétrique optique (OPO) configuré pour produire, à partir des impulsions pompe émises par le laser maître, les trains d'impulsions Stokes de deuxième pulsation, et un étireur temporel configuré pour étendre temporellement les impulsions pompe et/ou Stokes. Selon un ou plusieurs exemples de réalisation, l'étireur temporel comprend une ligne dispersive à prisme, une ligne dispersive à réseau, ou un simple barreau de verre configurer pour disperser les impulsion fs.

Comme précédemment, la source lumineuse peut comprendre également un laser maître et deux OPO ou deux lasers synchronisés.

Selon un ou plusieurs exemples de réalisation, dans le cas d'impulsions à dérive de fréquence, le dispositif peut comprendre en outre une ligne à retard permettant de générer un décalage temporel entre les impulsions des premier et deuxième trains d'impulsions, la variation du décalage temporel permettant de sonder différentes pulsations de résonance vibrationnelle moléculaire de l'échantillon.

Selon un deuxième aspect, l'invention concerne un procédé pour la détection d'un signal optique non linéaire résonant de type Diffusion Raman Stimulée (SRS) induit dans un échantillon mis en œuvre par le dispositif décrit selon le premier aspect et l'ensemble de ses variantes ou exemples de réalisation.

Selon un ou plusieurs exemples de réalisation, le procédé selon le deuxième aspect comprend:
- l'émission d'un premier train d'impulsions pompe à une première pulsation et d'un deuxième train d'impulsions Stokes à une deuxième pulsation telles qu'une différence entre les première et deuxième pulsations est égale à une pulsation de résonance vibrationnelle moléculaire de l'échantillon, les premier et deuxième trains d'impulsions étant synchronisés temporellement ;
- la modulation en amplitude dudit premier train d'impulsions pompe et dudit deuxième train d'impulsions Stokes respectivement à une première fréquence de modulation et à deuxième fréquences de modulation différente de la première fréquence de modulation;
- l'interaction dans l'échantillon lesdits trains d'impulsions pompe et Stokes modulés en amplitude ;
- une première détection optique d'un premier signal optique non linéaire à ladite première pulsation, ledit premier signal optique non linéaire résultant de l'interaction des impulsions lumineuses dans l'échantillon, et une première détection synchrone à ladite deuxième fréquence de modulation permettant d'extraire à partir du premier signal optique non linéaire ainsi détecté un premier signal caractéristique de la résonance vibrationnelle moléculaire de l'échantillon;
- une deuxième détection optique d'un deuxième signal optique non linéaire à ladite deuxième pulsation, ledit deuxième signal optique non linéaire résultant de l'interaction des impulsions lumineuses dans l'échantillon, et une deuxième détection synchrone à ladite première fréquence de modulation permettant d'extraire à partir du deuxième signal optique non linéaire ainsi détecté un deuxième signal caractéristique de la résonance vibrationnelle moléculaire de l'échantillon;
- une comparaison desdits premier et deuxième signaux caractéristiques de la résonance vibrationnelle moléculaire de l'échantillon pour déterminer la présence d'artefacts.

Selon un ou plusieurs exemples de réalisation, l'interaction dans l'échantillon lesdits trains d'impulsions pompe et Stokes modulés en amplitude comprend la focalisation des trains d'impulsion dans un volume de focalisation commun, par exemple un objectif de microscope, permettant d'obtenir des densités d'énergie suffisantes dans l'échantillon pour générer les effets optiques non linéaires.

Selon un ou plusieurs exemples de réalisation, ledit procédé pour la détection d'un signal optique non linéaire résonant de type SRS est un procédé d'imagerie vibrationnelle Raman, par exemple un procédé d'imagerie microscopique, ledit procédé comprenant en outre un déplacement relatif du volume de focalisation dans l'échantillon.

Selon un ou plusieurs exemples de réalisation, ladite comparaison desdits premier et deuxième signaux caractéristiques de la résonance vibrationnelle moléculaire de l'échantillon comprend le calcul d'un ratio entre lesdits deux signaux SRL et SRG.

En pratique, le procédé peut comprendre une étape préalable de calibration opérée par exemple avec un échantillon test, de telle sorte à ce que le ratio attendu soit égal à une constante prédéterminée, par exemple égale à 1. Dans ce cas, un rapport différent de ladite constante prédéterminée indique un effet SRS dissymétrique sur SRL et SRG révélant la présence d'artéfacts.

Lorsque le procédé est un procédé d'imagerie, le calcul d'un ratio entre lesdits deux signaux SRL et SRG, qui sont dans ce cas des signaux bidimensionnels, permet de déterminer des variations au sein de l'image qui révèlent la présence locale d'artefacts. Par exemple, ladite comparaison comprend le calcul préalable de la moyenne spatiale de chacun des signaux SRL et SRG, la normalisation de chaque signal par ladite moyenne et le calcul du ratio. Le calcul du ratio dans ce cas permet de révéler des artefacts différentiels entre les signaux SRL et SRG.

Selon un ou plusieurs exemples de réalisation, le procédé comprend en outre le calcul d'une somme desdits deux signaux caractéristiques de la résonance vibrationnelle moléculaire de l'échantillon, le signal résultant étant au moins partiellement affranchi desdits artefacts. La déposante a montré que la somme des signaux SRL et SRG annule au moins en partie les artéfacts, plus précisément les artéfacts symétriques qui ont une contribution positive que le signal SRL et négative sur le signal SRG (ou vice versa). Par ailleurs la somme va doubler le signal SRS en additionnant le signal SRL avec le signal SRG.

Selon un ou plusieurs exemples de réalisation, le procédé comprend en outre le calcul d'une différence desdits deux signaux caractéristiques de la résonance vibrationnelle moléculaire de l'échantillon. Il est alors possible d'identifier les artéfacts symétriques. Comme précédemment, le calcul de la somme (ou de la différence) peut être effectué après calibration ou, dans le cas d'un procédé d'imagerie, à partir des signaux SRL et SRG normalisés par une moyenne déterminée au préalable sur l'ensemble de chaque signal.

Selon un ou plusieurs exemples de réalisation, les premier et deuxième trains d'impulsions sont des trains d'impulsions à dérive de fréquence, centrées respectivement sur les première et deuxième pulsations.

Selon un ou plusieurs exemples de réalisation, le procédé comprend en outre la génération d'un décalage temporel entre les impulsions du premier train d'impulsions et les impulsions du deuxième train d'impulsions, de telle sorte à faire varier la fréquence de résonance vibrationnelle moléculaire de l'échantillon à laquelle le signal optique non linéaire est détecté.

### Brève description des figures

D'autres avantages et caractéristiques de l'invention apparaîtront à la lecture de la description, illustrée par les figures suivantes :
[Fig. 1A], déjà décrite, représente un schéma simplifié illustrant le principe de la Diffusion Raman Stimulée (SRS) ;
[Fig. 1B], déjà décrite, représente un schéma simplifié illustrant les processus SRL et SRG ;
[Fig. 1C], déjà décrite, représente un schéma d'un exemple de microscope SRS selon l'état de l'art ;
[Fig. 2] représente un schéma d'un exemple de microscope SRS selon la présente description ;
[Fig. 3A] représente un schéma illustrant la modulation temporelle à la première fréquence et le spectre en fréquence d'un train d'impulsions pompe dans un exemple de mise en œuvre d'un procédé selon la présente description ;
[Fig. 3B] illustre la modulation temporelle à la deuxième fréquence et le spectre en fréquence d'un train d'impulsions Stokes dans un exemple de mise en œuvre d'un procédé selon la présente description ;
[Fig. 3C] illustre la modulation temporelle et le spectre en fréquence d'un signal SRL détecté à la longueur d'onde pompe, dans un exemple de mise en œuvre d'un procédé selon la présente description ;
[Fig. 3D] illustre la modulation temporelle et le spectre en fréquence d'un signal SRG détecté à la longueur d'onde Stokes, dans un exemple de mise en œuvre d'un procédé selon la présente description ;
[Fig. 4A] illustre par des schémas la détection à la deuxième fréquence du signal optique à la longueur d'onde pompe résultant de l'interaction non linéaire, au cours d'étapes d'un exemple de procédé selon la présente description ;
[Fig. 4B] illustre par des schémas la détection à la première fréquence du signal optique à la longueur d'onde Stokes résultant de l'interaction non linéaire, au cours d'étapes d'un exemple de procédé selon la présente description ;
[Fig. 5A] représente des images expérimentales SRL, SRG et SRL/SRG de la surface d'une coquille d'huître, obtenues avec un microscope SRS selon la présente description, à la fréquence de résonance du phosphate (1090 cm⁻¹) ;
[Fig. 5B] représente des images expérimentales SRL, SRG et SRL/SRG de cellules nerveuses de souris, obtenues avec un microscope SRS selon la présente description, à la fréquence de résonance de la liaison CH₂ (2850 cm⁻¹) ;
[Fig. 6] représente des images expérimentales SRL, SRG, SRL+SRG et des rapports signal à bruit de SRL, SRG et SRL+SRG de la surface d'une cellule d'oignon, obtenues avec un microscope SRS selon la présente description, hors résonance, à la fréquence de résonance de la liaison CH₂ (2850 cm⁻¹)
[Fig. 7] représente un schéma d'un autre exemple de microscope SRS selon la présente description, dans un mode endoscopique utilisant une fibre optique ;
[Fig. 8] représente des schémas illustrant des impulsions pompe et Stokes, lorsqu'on leur a appliqué une dérive de fréquence, pour deux valeurs de retard temporel séparés de Δt.

### Description détaillée de l'invention

Sur les figures, les éléments ne sont pas représentés à l'échelle pour une meilleure visibilité.

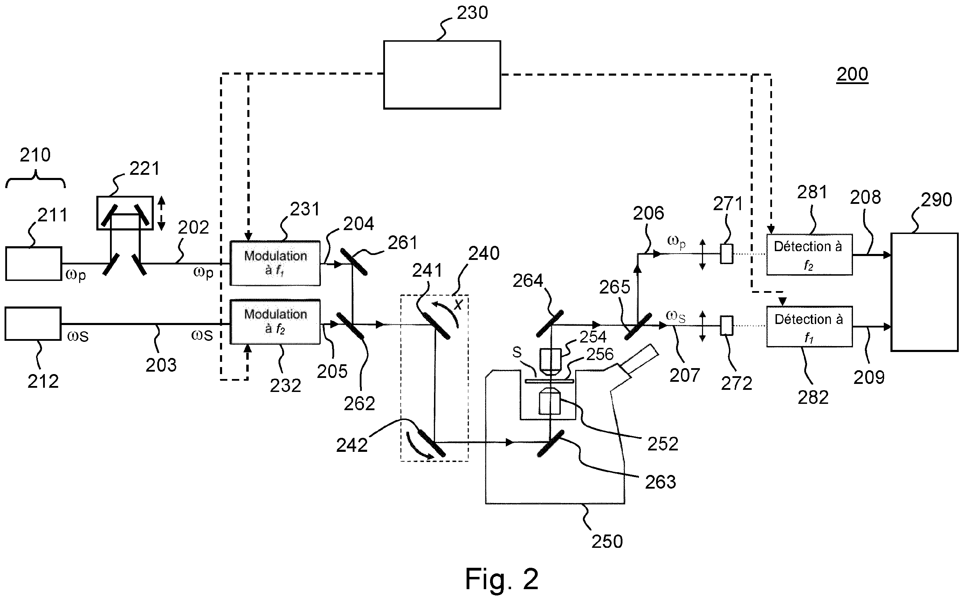

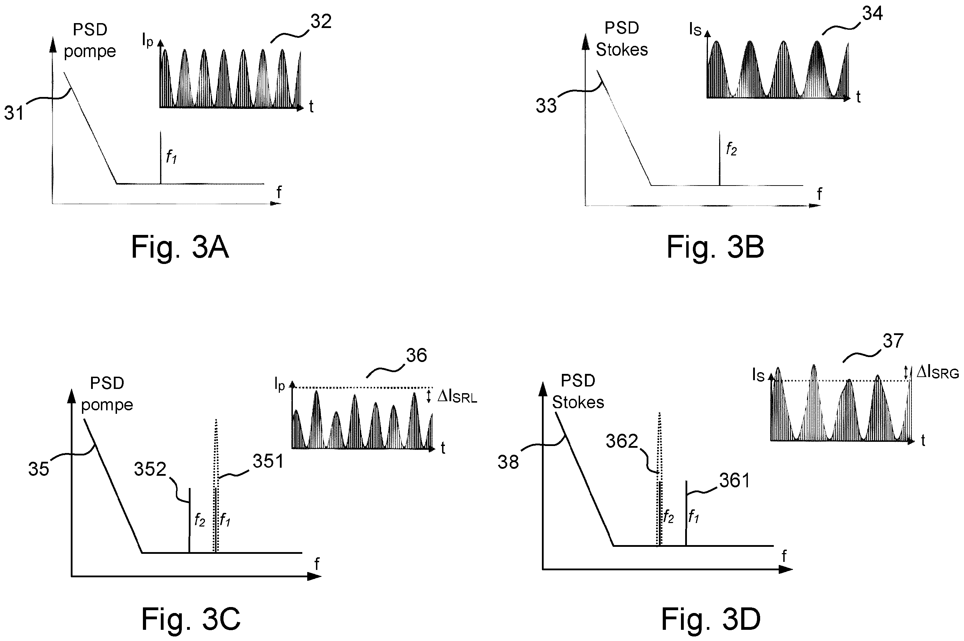

La Fig. 2 représente un schéma simplifié illustrant un exemple d'un dispositif 200 pour la détection d'un signal optique non linéaire résonant de type Diffusion Raman Stimulée (SRS) induit dans un échantillon S, et plus précisément un schéma illustrant un exemple d'un microscope SRS selon la présente description. Les Figs 3A - 3D représentent des schémas illustrant l'intensité optique en fonction du temps de trains d'impulsions aux pulsations pompe ou Stokes au cours du procédé et des schémas représentant le spectre en fréquence desdits trains d'impulsions.

Le dispositif 200 comprend une source lumineuse 210 configurée pour l'émission d'un premier faisceau 202, ou « faisceau pompe », formé d'un premier train d'impulsions pompe à une première pulsation ωₚ et configurée pour l'émission d'un deuxième faisceau 203, ou « faisceau Stokes » formé d'un deuxième train d'impulsions Stokes à une deuxième pulsation ωₛ telles qu'une différence ωₚ - ωₛ entre les première et deuxième pulsations est égale à une pulsation de résonance vibrationnelle moléculaire Ω_{R} de l'échantillon S que l'on cherche à observer.

Le premier train d'impulsions et le deuxième trains d'impulsions sont synchronisés temporellement pour permettre l'interaction des impulsions pompe et Stokes dans l'échantillon.

Les impulsions sont par exemple des impulsions picosecondes, de durées comprises entre environ 1ps et environ 10 ps, par exemple entre environ 1ps et environ 3ps, de finesse spectrale comprises entre environ 15 cm⁻¹ et environ 5 cm⁻¹, ou peuvent être des impulsions à dérive de fréquence comme cela sera décrit plus en détails par la suite. Typiquement, les impulsions sont émises à des cadences de quelques dizaines de MHz, comprises par exemple entre environ 10 MHz et environ 100 MHz, par exemple autour de 80 MHz, pendant une durée de l'ordre de la microseconde.

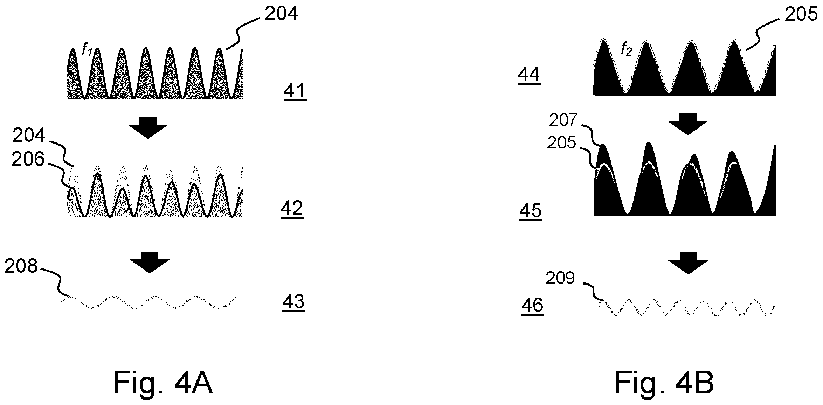

La source lumineuse 210 peut comprendre des lasers indépendantes 211, 212 synchronisés, comme cela est représenté sur la Fig.4.

Dans d'autres exemples de réalisation, la source lumineuse 210 peut comprendre un système laser avec un laser maître émettant des trains d'impulsions à la pulsation pompe et un laser OPO (ou Oscillateur Paramétrique Optique) recevant du laser maître les impulsions pompe et configuré pour émettre des impulsions à la pulsation Stokes. La source lumineuse 210 peut également comprendre un système laser avec un laser maître et deux OPO configurés pour générer les trains d'impulsions pompe et Stokes à partir d'impulsions émises par le laser maître. Dans les deux cas, les trains d'impulsions sont automatiquement synchronisés. Il est par ailleurs possible de modifier la pulsation des impulsions Stokes, éventuellement des impulsions pompe dans le cas de deux OPO, les OPO étant accordables en longueur d'onde.

Par exemple, dans le cas d'un système laser constitué d'un laser maître et d'un OPO, le laser maître peut émettre des impulsions pompe avec une pulsation pompe correspondant à une longueur d'onde comprise entre environ 1000 nm et environ 1100 nm, par exemple entre environ 1030 nm et environ 1065 nm, cette plage de longueur d'onde recouvrant les longueurs d'onde d'émission d'un laser Ytterbium et d'un laser YAG. L'OPO peut émettre des impulsions Stokes avec une pulsation Stokes correspondant à une longueur d'onde comprise entre environ 600 nm et environ 1000 nm, par exemple entre environ 640 nm et environ 960 nm.

Dans le cas d'un système laser comprenant un laser maître et de deux OPO, le laser maître peut émettre des impulsions avec une pulsation correspondant à une longueur d'onde comprise comme précédemment entre environ 1000 nm et environ 1100 nm, par exemple entre environ 1030 nm et environ 1065 nm, et les OPO peuvent émettre, pour chacun, des impulsions pompe et Stokes avec des pulsations correspondant à des longueurs d'onde comprises entre environ 600 nm et environ 1000 nm, par exemple entre environ 640 nm et environ 960 nm.

Dans l'exemple de la Fig. 2, une ligne à retard 221 permet de synchroniser temporellement les trains d'impulsions pompe et Stokes pour assurer un recouvrement temporel des impulsions dans l'échantillon. Comme cela sera décrit plus en détails par la suite, la ligne à retard peut être configurée pour introduire un retard temporel variable. Elle peut être positionnée sur l'une et/ou l'autre des voies pompe et Stokes.

Par ailleurs, le dispositif 200 comprend un premier modulateur en amplitude 231 configuré pour moduler en amplitude le premier train d'impulsions pompe à une première fréquence de modulation f₁ et un deuxième modulateur en amplitude 232 configuré pour moduler en amplitude le deuxième train d'impulsions Stokes à une deuxième fréquence de modulation f₂ différente de la première fréquence de modulation. Il en résulte des faisceaux pompe et Stokes formés de trains d'impulsions modulés en amplitude aux fréquences f₁ et f₂, et notés respectivement 204 et 205 sur la Fig. 2.

La Fig. 3A illustre ainsi, selon un exemple, l'intensité Iₚ d'un train d'impulsions 204 à la pulsation pompe ωₚ, modulé en amplitude à la fréquence f₁ (courbe 32). La courbe 31 sur la Fig. 3A illustre la densité spectrale en puissance (ou PSD pour « power spectral density ») en fonction de la fréquence pour le train d'impulsions 204. Comme cela est visible sur la Fig. 3A, le spectre en fréquence comprend dans les basses fréquences une contribution en 1/f liée au bruit, la contribution à f₁. A noter que le pic de fréquence à la fréquence de répétions des impulsions n'est pas représenté sur la figure.

De la même manière, la Fig. 3B illustre, selon un exemple, l'intensité I_{S} d'un train d'impulsions 205 à la pulsation pompe ωₚ, modulé en amplitude à la fréquence f₂ (courbe 34). La courbe 33 sur la Fig. 3A illustre comme précédemment la densité spectrale en puissance en fonction de la fréquence pour le train d'impulsions 205 avec notamment le pic à la fréquence f₂ correspondant à la modulation du train d'impulsions.

Les modulateurs en amplitude 231, 232 sont par exemple des modulateurs acousto- ou électro-optiques recevant des signaux de modulation d'un générateur radio fréquence (RF) 230. Les fréquences de modulation f₁ et f₂ sont comprises par exemple entre 1 MHz et 40 MHz. Avantageusement, elles sont choisies de telle sorte à ne pas être multiples l'une de l'autre pour éviter, lorsque les modulateurs en amplitude ne sont pas parfaits et génèrent des harmoniques, de générer des faisceaux pompe et Stokes aux mêmes fréquences.

Dans l'exemple de la Fig. 2, le dispositif 200 comprend en outre des moyens optomécaniques pour faire interagir dans l'échantillon S lesdits trains d'impulsions pompe et Stokes 204, 205 modulés en amplitude. Les moyens optomécaniques comprennent dans cet exemple des éléments réfléchissants 261, 262, 263 dont par exemple un miroir dichroïque 262, ainsi qu'un objectif de microscope 252 configuré pour focaliser les impulsions pompe et Stokes dans un volume de focalisation commun dans l'échantillon S. L'objectif de microscope 252 et le miroir de renvoi 263 sont dans cet exemple agencés dans le corps d'un microscope 250. L'objectif de microscope est par exemple un objectif de microscope d'ouverture numérique compris entre environ 0.3 et environ 1.3 par exemple une ouverture numérique ON = 0.5. L'objectif de microscope est par ailleurs avantageusement achromatique dans le domaine de longueurs d'onde d'intérêt, par exemple dans le proche infrarouge (600 - 1100 nm).

Selon des exemples de réalisation, les moyens optomécaniques peuvent comprendre également sur chacune des voies pompe et Stokes un télescope de grandissement donné (non représenté), permettant de régler la divergence des faisceaux pompe et Stokes afin d'optimiser leur recouvrement spatial au foyer de l'objectif de microscope. Par exemple, les faisceaux pompe et Stokes sont excités selon leur mode fondamental TEM00 de sorte que les champs électrique et magnétique sont tous les deux perpendiculaires à la direction de propagation de ces signaux; les faisceaux pompe et Stokes sont par exemple polarisés rectilignement, avec la même direction de polarisation, permettant l'optimisation du signal dans un milieu homogène.

Les moyens optomécaniques peuvent comprendre également une platine motorisée 256 permettant de déplacer l'échantillon S relativement au volume de focalisation commun des trains d'impulsions afin de former une image de l'échantillon pour une application du dispositif à l'imagerie SRS. Alternativement ou en complément, un système de balayage 240 des faisceaux pompe et Stokes, comprenant par exemple deux miroirs galvanométriques 241, 242 peut également être utilisé pour déplacer le volume de focalisation dans l'échantillon.

Le dispositif 200 comprend par ailleurs des premiers moyens de détection optique configurés pour la détection optique d'un premier signal optique non linéaire 206 à la pulsation pompe ωₚ résultant de l'interaction des impulsions lumineuses dans l'échantillon. La Fig. 3C illustre, selon un exemple, l'intensité Iₚ du premier signal optique non linéaire 206 à la pulsation pompe ωₚ (courbe 36) et la courbe 35 sur la Fig. 3C illustre la densité spectrale en puissance en fonction de la fréquence pour le signal optique 206. Comme cela est visible sur la Fig. 3C, en plus de la modulation a f₁ (351) réalisée par le modulateur 231 (Fig. 2) un signal SRL apparait à la fréquence f₂ (352).

Le dispositif 200 comprend également des deuxièmes moyens optiques configurés pour la détection optique d'un deuxième signal optique non linéaire 207 à la pulsation Stokes ω_{S}, le deuxième signal optique non linéaire résultant de l'interaction des impulsions lumineuses dans l'échantillon.

De la même manière, la Fig. 3D illustre, selon un exemple, l'intensité Is du deuxième signal optique non linéaire 207 à la pulsation pompe ω_{S} (courbe 37) et la courbe 38 sur la Fig. 3D illustre la densité spectrale en puissance en fonction de la fréquence pour le signal optique 207. Comme cela est visible sur la Fig. 3D, en plus de la modulation à f2 (362) réalisée par le modulateur 232 (Fig. 2) un signal SRG apparait à la fréquence f1 (361). Dans l'exemple de la Fig. 2, les premiers et deuxièmes moyens de détection optique partagent un objectif de collection 254, par exemple agencé dans le corps de microscope 250, un ensemble d'éléments réfléchissants 264, 265 dont un miroir dichroïque 265 permettant de séparer les deux voies de détection. L'objectif de collection 254 est par exemple un objectif de microscope de plus grande ouverture numérique que l'objectif de microscope 252, par exemple d'ouverture numérique ON=0.60, afin de collecter les trains d'impulsions issus de l'échantillon sans les diaphragmer.

Par ailleurs, les premiers moyens de détection optique comprennent un premier détecteur optique 271 et les deuxièmes moyens de détection optique comprennent un deuxième détecteur optique 272. Les premier et deuxième détecteurs 271, 272 sont par exemple des photodiodes sensibles respectivement aux pulsations pompe et stokes. Chaque voie de détection peut comprendre par ailleurs un ou plusieurs éléments de conjugaison optique et des moyens de filtrage optique (non représentés), par exemple un filtre optique interférentiel, permettant de sélectionner sur chaque détecteur la radiation à la pulsation d'intérêt.

Dans l'exemple de la Fig. 2, les premiers et deuxièmes moyens de détection optique sont configurés pour une détection en configuration avant (ou «*forward*»). Bien entendu, on peut tout à fait envisager des premiers et deuxièmes moyens de détection optique configurés pour une détection en configuration arrière (ou «*epi*»), intéressante notamment pour des échantillons épais/ou faiblement transparents. Dans ce cas, les signaux collectés dépendent du caractère rétrodiffusant de l'échantillon.

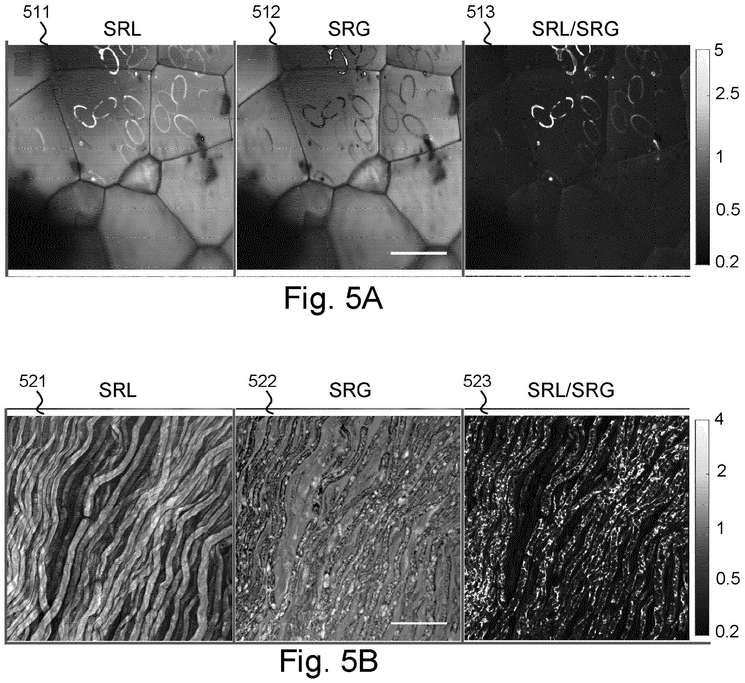

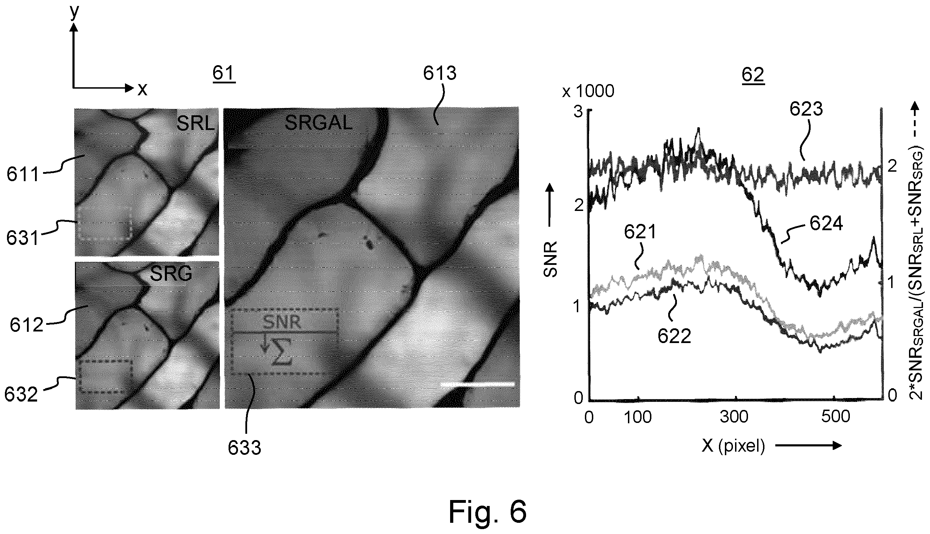

Comme illustré sur la Fig. 2, le dispositif 200 comprend par ailleurs des premiers moyens de détection synchrone 281 permettant d'extraire, à la deuxième fréquence de modulation f₂, et à partir du premier signal optique non linéaire 206 détecté par le premier détecteur optique 271 un premier signal 208 caractéristique de la résonance vibrationnelle moléculaire de l'échantillon. Comme cela sera expliqué plus en détails par la suite, le signal 208 n'est autre que le signal SRL. Le dispositif 200 comprend également des deuxièmes moyens de détection synchrone 282 permettant d'extraire, à la première fréquence de modulation f₁, et à partir du deuxième signal optique non linéaire 207 détecté par le deuxième détecteur 272, un deuxième signal 209 caractéristique de la résonance vibrationnelle moléculaire de l'échantillon. Comme cela sera expliqué plus en détails par la suite, le signal 209 est le signal SRG. Le dispositif 200 comprend enfin des moyens de traitement électronique 290 configurés pour comparer le premier signal caractéristique de la résonance vibrationnelle moléculaire de l'échantillon S (signal SRL) et le deuxième signal caractéristique de la résonance vibrationnelle moléculaire de l'échantillon S (signal SRG) afin de déterminer la présence d'artefacts, comme cela sera illustré au moyen des Figs. 5A, 5B et 6.

Les premiers et deuxièmes moyens de détection synchrone 281, 282 peuvent par exemple comprendre une détection synchrone analogique respectivement aux fréquences de modulation f₁, f₂. Alternativement, la détection synchrone du signal sur chacune des voies peut être réalisée numériquement, par un traitement numérique des signaux directement issus de la détection optique.

Les Figs. 4A et 4B illustrent respectivement la détection synchrone du premier signal optique non linéaire 206 et la détection synchrone du deuxième signal optique non linéaire 207 respectivement à la fréquence f₂ et à la fréquence f₁.

Sur la Fig. 4A, le schéma 41 illustre l'intensité en fonction du temps du train d'impulsions 204 (Fig. 2) à la pulsation de pompe ωₚ, modulé à la première fréquence f₁. Le schéma 42 illustre l'intensité en fonction du temps du premier signal optique non linéaire 206 détecté par le premier détecteur optique 271. Comme cela est visible sur le schéma 42, l'intensité du premier signal optique non linéaire 206 est diminuée par rapport au signal optique 204. Cette diminution d'intensité résulte du processus SRL sur le train d'impulsion à la pulsation pompe, le processus étant induit par l'interaction avec le train d'impulsion à la pulsation Stokes modulé à la fréquence f₂. La détection synchrone à la deuxième fréquence f₂ permet ainsi d'extraire le signal 208 (schéma 43) qui est le signal SRL correspondant à la déplétion d'intensité sur le faisceau pompe.

De la même manière, sur la Fig. 4B, le schéma 44 illustre l'intensité en fonction du temps du train d'impulsions 205 (Fig. 2) à la pulsation de Stokes ω_{S}, modulé à la deuxième fréquence f₂. Le schéma 45 illustre l'intensité en fonction du temps du deuxième signal optique non linéaire 207 détecté par le deuxième détecteur optique 272. Comme cela est visible sur le schéma 45, l'intensité du deuxième signal optique non linéaire 207 est augmentée par rapport à celle du signal optique 205. Cette augmentation d'intensité résulte du processus SRG sur le train d'impulsion à la pulsation Stokes, le processus étant induit par l'interaction avec le train d'impulsion à la pulsation pompe modulé à la fréquence f₁. La détection synchrone à la fréquence f₁ permet ainsi d'extraire le signal 209 (schéma 46) qui est le signal SRG correspondant au gain d'intensité sur le faisceau Stokes.

La déposante a montré que la comparaison de ces signaux permettait d'obtenir des informations sur les artefacts.

En effet, l'amplitude de ces signaux SRL et SRG après calibration devrait être égale. Une différence d'amplitude est donc significative d'un artefact sur la mesure du signal SRS. Les Figs. 5A, 5B et 6 illustrent l'exploitation des signaux SRL et SRG déterminés au moyen d'un procédé selon la présente description, dans le cas d'application à l'imagerie. Les images de Figs 5A, 5B et 6 mettent en œuvre une calibration comprenant la détermination d'une moyenne spatiale sur l'ensemble des pixels de l'image et la normalisation de chaque image avec la moyenne calculée. Alternativement, il est possible de calibrer le dispositif de telle sorte que les gains des électroniques SRL et SRG donnent des signaux SRL et SRG égaux sur un échantillon test présentant un fort signal SRS (par exemple de l'huile à 2850 cm⁻¹).

Plus précisément, la Fig. 5A représente des images expérimentales montrant un signal bidimensionnel SRL (image 511), un signal bidimensionnel SRG (image 512) et le rapport des signaux SRL/SRG (image 513) de la surface d'une coquille d'huître. Les signaux SRL et SRG sont obtenus avec un microscope SRS selon la présente description, à la fréquence de résonance du phosphate (1090 cm⁻¹). On constate que le ratio SRL/SRG (513) présente une valeur strictement supérieure à 1 sur des structures elliptiques qui sont attribuées à des parasites et qui présentent une absorption à 2 photons (augmentation du signal SRL sur l'image 511 et diminution du signal SRG sur l'image 512). Ces structures elliptiques sont ainsi interprétées étant comme des artefacts dans les images SRL (511) et SRG (512).

La Fig. 5B représente des images expérimentales montrant un signal bidimensionnel SRL (image 521), un signal bidimensionnel SRG (image 522) et le rapport des signaux SRL/SRG (image 523) de cellules nerveuses de souris. Les signaux SRL et SRG sont obtenus avec un microscope SRS selon la présente description, à la fréquence de résonance de la liaison CH₂ (2850 cm⁻¹). On constate que le ratio SRL/SRG (523) présente une valeur strictement supérieure à 1 sur des structures ponctuelles qui sont interprétées comme étant des accumulations locales de myéline produisant de la modulation de phase croisée. Ces structures ponctuelles sont ainsi interprétées comme étant des artefacts dans les images SRL (521) et SRG (522).

La Fig. 6 représente sur le schéma 61 des images expérimentales montrant dans un repère XY un signal bidimensionnel SRL (image 611) et un signal bidimensionnel SRG (image 612) de la surface d'une cellule d'oignon, ainsi que la somme SRL+SRG des signaux SRL et SRG (image 613), appelé signal SRGAL dans la présente description. Les signaux SRL et SRG sont obtenus avec un microscope SRS selon la présente description, à la fréquence de résonance de la liaison CH₂ (2850 cm⁻¹).

Par ailleurs, la Fig. 6 représente sur le schéma 62 des courbes représentant des rapports signal à bruit (ou « SNR » pour « Signal to Noise Ratio ») des images SRL (621), SRG (622) et SRL+SRG (624) illustrés sur le schéma 61, en fonction de la direction X. Ces rapports signal à bruit sont calculés par le rapport entre la moyenne au carré du signal et sa variance. Ils sont établis sur des régions d'intérêt de chaque notées par les rectangles pointillés 631, 632, 633 respectivement sur les images 611, 612 et 613. Ils sont intégrés sur la direction Y des régions d'intérêt et représentés suivant X sur le graphe 62. On constate que les SNR des images SRL (621) et SRG (622) (dénommés respectivement SNR_{SRL} et SNR_{SRG}) sont similaires. Par contre le SNR de la somme SRL+SRG (624) (dénommé SNR_{SRGAL}) est supérieur d'un facteur 2. Cela est illustré graphiquement par la courbe 623 qui représente le rapport 2SNR_{SRGAL}/(SNR_{SRL}+SNR_{SRG}). Ceci démontre que l'image SRL+SRG (613) présente un SNR deux fois supérieur aux images SRL (611) et SRG (612).

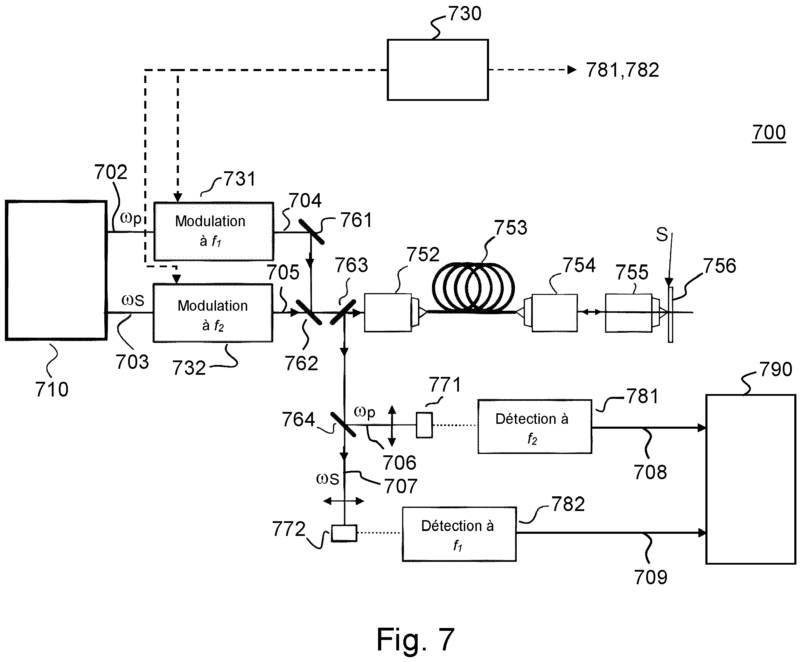

La Fig. 7 représente un schéma d'un dispositif 700 pour la détection d'un signal optique non linéaire résonant de type Diffusion Raman Stimulée (SRS) induit dans un échantillon S, et plus précisément un schéma illustrant un exemple d'un microscope SRS selon la présente description dans un mode endoscopique utilisant une fibre optique.

Comme décrit en référence à la Fig. 2, le dispositif 700 comprend une source lumineuse 710 configurée pour l'émission d'un premier faisceau 702, ou « faisceau pompe », formé d'un premier train d'impulsions pompe à une première pulsation ωₚ et configurée pour l'émission d'un deuxième faisceau 703, ou « faisceau Stokes » formé d'un deuxième train d'impulsions Stokes à une deuxième pulsation ωₛ telles qu'une différence ωₚ - ωₛ entre les première et deuxième pulsations est égale à une pulsation de résonance vibrationnelle moléculaire Ω_{R} de l'échantillon S que l'on cherche à observer. Le premier train d'impulsions et le deuxième trains d'impulsions sont synchronisés temporellement pour permettre l'interaction des impulsions pompe et Stokes dans l'échantillon et la source lumineuse 710 peut être une source telle que celles décrites en référence à la Fig. 2. Une ligne à retard (non représenté sur la Fig. 7) peut permettre de synchroniser temporellement les trains d'impulsions pompe et Stokes pour assurer un recouvrement temporel des impulsions dans l'échantillon. La ligne à retard peut également être configurée pour introduire un retard temporel variable. Elle peut être positionnée sur l'une et/ou l'autre des voies pompe et Stokes. Le dispositif 700 comprend un premier modulateur en amplitude 731 configuré pour moduler en amplitude le premier train d'impulsions pompe à une première fréquence de modulation f₁ et un deuxième modulateur en amplitude 732 configuré pour moduler en amplitude le deuxième train d'impulsions Stokes à une deuxième fréquence de modulation f₂ différente de la première fréquence de modulation. Les modulateurs en amplitude 731, 732 reçoivent par exemple des signaux de modulation d'un générateur radio fréquence (RF) 730. Il en résulte des faisceaux pompe et Stokes formés de trains d'impulsions modulés en amplitude aux fréquences f₁ et f₂, et notés respectivement 704 et 705 sur la Fig. 7. Les fréquences f₁ et f₂ peuvent être similaires à celles décrites en référence à la Fig. 2.

Dans l'exemple de la Fig. 7, le dispositif 700 comprend en outre des moyens optomécaniques pour faire interagir dans l'échantillon S les trains d'impulsions pompe et Stokes 704, 705 modulés en amplitude.

Les moyens optomécaniques sont configurés dans cet exemple pour une application en endoscopie. Les moyens optomécaniques comprennent ainsi dans cet exemple une fibre optique de transport 753, par exemple une fibre optique monomode, et des éléments optiques pour l'injection des trains d'impulsion pompe et Stokes dans la fibre 753. Les éléments optiques pour l'injection dans la fibre comprennent, dans cet exemple, des éléments réfléchissants 761, 762, 763 dont par exemple des miroirs dichroïques 761, 762 et un élément semi-réfléchissant 763, ainsi qu'un objectif de microscope 752. En sortie de fibre, les trains d'impulsions sont collectés par un objectif de microscope 754 et envoyés vers un objectif de microscope 755 configuré pour focaliser les impulsions pompe et Stokes dans un volume de focalisation commun dans l'échantillon S. Le balayage de l'échantillon S peut se faire sont en déplaçant ce dernier à l'aide d'une platine de translation XY (référencée 756) soit, notamment lorsque l'échantillon S n'est pas accessible, en insérant un dispositif de balayage (non représenté sur la Fig. 7) configuré pour balayer les trains d'impulsions pompe et Stokes sur l'échantillon. Un tel dispositif de balayage peut être similaire à celui représenté sur la Fig.2 ou plus compact, grâce à l'utilisation par exemple de tubes piézo-électriques agencés en partie distale de l'endoscope.

L'exemple de la Fig. 7 illustre un dispositif en configuration arrière ou « *epi* », dans lequel les premiers et deuxièmes moyens de détection optique sont configurés respectivement pour la détection optique d'un premier signal optique non linéaire à la pulsation pompe ωₚ (signal référencé 706 sur la Fig. 7) rétrodiffusé par l'échantillon et d'un deuxième signal optique non linéaire à la pulsation Stokes ω_{S} (signal référencé 707 sur la Fig. 7) rétrodiffusé par l'échantillon, les deux signaux résultant de l'interaction des impulsions lumineuses dans l'échantillon. Ainsi, les premiers et deuxièmes moyens de détection optique comprennent des éléments optiques communs aux moyens optomécaniques pour faire interagir dans l'échantillon S les trains d'impulsions pompe et Stokes, à savoir les objectifs de microscope 755, 754, 752 et la fibre optique 753. Les signaux rétrodiffusés pompe et Stokes sont ainsi collectés par la même fibre optique 753 et redirigés respectivement vers un premier détecteur optique 771 et vers un deuxième détecteur optique 772 au moyen de la lame semi-réfléchissante 763 et d'une lame dichroïque 764 permet de séparer les signaux 706 et 707. Comme en référence à la Fig. 2, des détections synchrones 781, 782 permettent d'extraire respectivement les signaux SRL (708) et SRG (709) qui sont traités par les moyens de traitement 790 pour la mise en œuvre d'un procédé conforme à la présente description, comme décrit par exemple en référence aux Figs 5A, 5B et 6.

Que ce soit dans l'exemple de la Fig. 2 ou dans l'exemple de la Fig. 7, pour une application du dispositif à la spectroscopie ou à l'imagerie hyperspectrale, il est également possible de faire varier les pulsations ωₚ et/ou ω_{S} des trains d'impulsions pompe et Stokes afin de sonder le signal SRS en fonction de la fréquence vibrationnelle moléculaire. Les moyens de traitement 290 (Fig. 2) ou 790 (Fig. 7) permettent alors d'extraire le signal caractéristique recherché en fonction de la fréquence vibrationnelle moléculaire pour former un spectre.

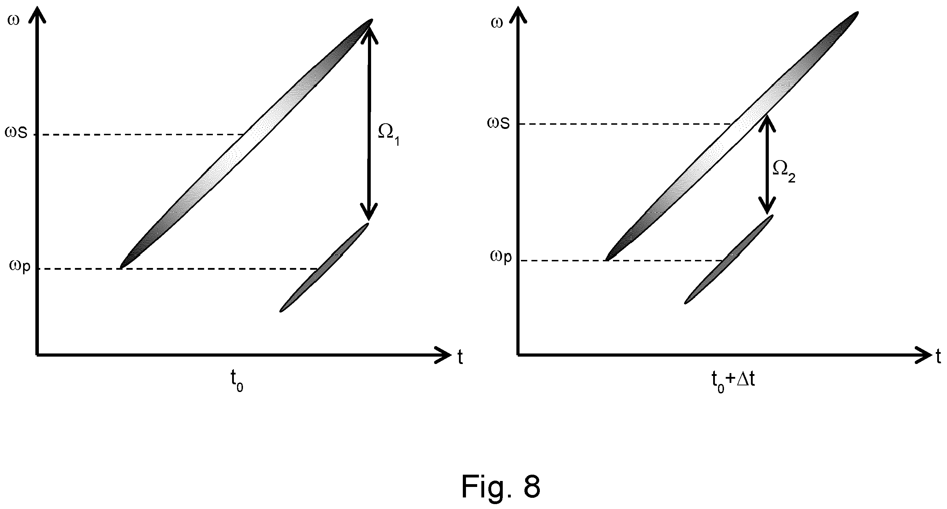

La Fig. 8 illustre un exemple particulier dans lequel les impulsions pompe et Stokes sont des impulsions ultracourtes étendues temporellement au moyen d'un étireur pour former des trains impulsions à dérive de fréquence centrées respectivement sur les pulsations ωₚ et ω_{S}. Une modulation du retard temporel entre les trains d'impulsions aux pulsations ωₚ et ω_{S} est alors possible au moyen par exemple d'une ligne à retard, comme cela a été décrit en référence à la Fig. 2 par exemple. La même méthode de détection synchrone peut être mise en œuvre pour la détection des signaux SRG et SRL. Comme illustré sur la Fig. 8, une variation du retard temporel Δt permet alors de sonder la résonance vibrationnelle d'intérêt Ω.

Bien que décrite à travers un certain nombre d'exemples de réalisation, les procédés et les dispositifs selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### REFERENCES

[Réf. 1] N. Bloembergen et al.« The stimulated raman effect », American Journal of Physics, 35:989-1023, 1967)
[Réf. 2]: C.W. Freudiger et al. « Label-free biomedical imagingwith high sensitivity by stimulated Raman scattering microscopy", Science, 322(5909):1857-1861, 2008
[Réf. 3] : Marshall T. Bremer et al. « Standoff explosives trace détection and imaging by selective stimulated Raman scattering", Applied Physics Letters, vol. 103, no. 6, 5 août 2013, page 061119.
[Réf. 4] WO2014154708

## Revendications

1. Dispositif (200) pour la détection d'un signal optique non linéaire résonant de type Diffusion Raman Stimulée (SRS) induit dans un échantillon (S), le dispositif comprenant :
- une source lumineuse (210) configurée pour l'émission d'un premier train d'impulsions pompe (202) à une première pulsation (ωₚ) et d'un deuxième train d'impulsions Stokes (203) à une deuxième pulsation (ωₛ) telles qu'une différence (ωₚ
- ωₛ) entre les première et deuxième pulsations est égale à une pulsation de résonance vibrationnelle moléculaire (Ω_{R}) de l'échantillon, les premier et deuxième trains d'impulsions étant synchronisés temporellement ;
- un premier modulateur en amplitude (231) configuré pour moduler en amplitude le premier train d'impulsions pompe à une première fréquence de modulation (fi) et un deuxième modulateur en amplitude (232) configuré pour moduler en amplitude le deuxième train d'impulsions Stokes à une deuxième fréquence de modulation (f₂) différente de la première fréquence de modulation ;
- des moyens optomécaniques pour faire interagir dans l'échantillon lesdits trains d'impulsions pompe et Stokes (204, 205) modulés en amplitude;
- des premiers moyens de détection optique (271) configurés pour la détection optique d'un premier signal optique non linéaire à ladite première pulsation (ωₚ), ledit premier signal optique non linéaire résultant de l'interaction, dans l'échantillon, des impulsions lumineuses pompe et Stokes (204, 205) modulés en amplitude, et des moyens de détection synchrone (281) à ladite deuxième fréquence de modulation (f₂) permettant d'extraire à partir du premier signal optique non linéaire ainsi détecté un premier signal (208) caractéristique de la résonance vibrationnelle moléculaire de l'échantillon;
- des deuxièmes moyens de détection optique (272) configurés pour la détection optique d'un deuxième signal optique non linéaire à ladite deuxième pulsation (ω_{S}), ledit deuxième signal optique non linéaire résultant de l'interaction, dans l'échantillon, des impulsions lumineuses pompe et Stokes (204, 205) modulés en amplitude , et des moyens de détection synchrone (282) à ladite première fréquence de modulation (fi) permettant d'extraire à partir du deuxième signal optique non linéaire ainsi détecté un deuxième signal (209) caractéristiques de la résonance vibrationnelle moléculaire de l'échantillon;
- des moyens de traitement électronique (290) configurés pour comparer lesdits premier et deuxième signaux caractéristiques de la résonance vibrationnelle moléculaire de l'échantillon afin de déterminer la présence d'artefacts.

2. Dispositif selon la revendication 1, dans lequel la comparaison desdits premier et deuxième signaux caractéristiques de la résonance vibrationnelle moléculaire de l'échantillon comprend le calcul d'un ratio entre lesdits signaux.

3. Dispositif selon l'une quelconque des revendications précédentes, dans lequel lesdits moyens de traitement électronique (290) sont configurés pour calculer en outre une somme et/ou une différence desdits premier et deuxième signaux caractéristiques de la résonance vibrationnelle moléculaire de l'échantillon.

4. Dispositif selon l'une quelconque des revendications précédentes, dans lequel lesdits moyens optomécaniques comprennent un élément optique de focalisation (252) des trains d'impulsion dans un volume de focalisation commun.

5. Dispositif selon la revendication 4, dans lequel lesdits moyens optomécaniques comprennent en outre des moyens (240) de déplacement relatif du volume de focalisation dans l'échantillon.

6. Dispositif selon l'une quelconque des revendications précédentes, dans lequel les premier et deuxième trains d'impulsions sont des trains d'impulsions à dérive de fréquence, centrées respectivement sur les première et deuxième pulsations.

7. Dispositif selon la revendication 6, comprenant en outre une ligne à retard (221) configurée pour générer un décalage temporel entre les impulsions du premier train d'impulsions et les impulsions du deuxième train d'impulsions, de telle sorte à faire varier la fréquence de résonance vibrationnelle moléculaire de l'échantillon à laquelle le signal optique non linéaire est détecté.

8. Dispositif selon l'une quelconque des revendications précédentes, **caractérisé en ce qu'**il est au moins partiellement fibré.

9. Procédé pour la détection d'un signal optique non linéaire résonant de type Diffusion Raman Stimulée (SRS) induit dans un échantillon comprenant :
- l'émission d'un premier train d'impulsions pompe à une première pulsation (ωₚ) et d'un deuxième train d'impulsions Stokes (203) à une deuxième pulsation (ωₛ) telles qu'une différence (ωₚ - ωₛ) entre les première et deuxième pulsations est égale à une pulsation de résonance vibrationnelle moléculaire (Ω_{R}) de l'échantillon, les premier et deuxième trains d'impulsions étant synchronisés temporellement ;
- la modulation en amplitude dudit premier train d'impulsions pompe et dudit deuxième train d'impulsions Stokes respectivement à une première fréquence de modulation (f₁) et à deuxième fréquences de modulation (f₂) différente de la première fréquence de modulation;
- l'interaction dans l'échantillon lesdits trains d'impulsions pompe et Stokes (204, 205) modulés en amplitude ;
- une première détection optique d'un premier signal optique non linéaire à ladite première pulsation (ωₚ), ledit premier signal optique non linéaire résultant de l'interaction des impulsions lumineuses dans l'échantillon, et une première détection synchrone à ladite deuxième fréquence de modulation (f₂) permettant d'extraire à partir du premier signal optique non linéaire ainsi détecté un premier signal (208) caractéristique de la résonance vibrationnelle moléculaire de l'échantillon;
- une deuxième détection optique d'un deuxième signal optique non linéaire à ladite deuxième pulsation (ωₛ), ledit deuxième signal optique non linéaire résultant de l'interaction des impulsions lumineuses dans l'échantillon, et une deuxième détection synchrone à ladite première fréquence de modulation (f₁) permettant d'extraire à partir du deuxième signal optique non linéaire ainsi détecté un deuxième signal (209) caractéristique de la résonance vibrationnelle moléculaire de l'échantillon;
- une comparaison desdits premier et deuxième signaux caractéristiques de la résonance vibrationnelle moléculaire de l'échantillon pour déterminer la présence d'artefacts.

10. Procédé selon la revendication 9, dans lequel ladite comparaison desdits premier et deuxième signaux caractéristiques de la résonance vibrationnelle moléculaire de l'échantillon comprend le calcul d'un ratio entre lesdits deux signaux.

11. Procédé selon l'une quelconque des revendications 9 à 10, comprenant en outre le calcul d'une somme desdits deux signaux caractéristiques de la résonance vibrationnelle moléculaire de l'échantillon, le signal résultant étant doublé et au moins partiellement affranchi desdits artefacts.

12. Procédé selon l'une quelconque des revendications 9 à 11, comprenant en outre le calcul d'une différence desdits deux signaux caractéristiques de la résonance vibrationnelle moléculaire de l'échantillon, le signal résultant étant représentatif d'au moins une partie desdits artefacts.

13. Procédé selon l'une quelconque des revendications 9 à 12, dans lequel les premier et deuxième trains d'impulsions sont des trains d'impulsions à dérive de fréquence, centrées respectivement sur les première et deuxième pulsations.

14. Procédé selon la revendication 13, comprenant en outre la génération d'un décalage temporel entre les impulsions du premier train d'impulsions et les impulsions du deuxième train d'impulsions, de telle sorte à faire varier la fréquence de résonance vibrationnelle moléculaire de l'échantillon à laquelle le signal optique non linéaire est détecté.

15. Procédé selon l'une quelconque des revendications 9 à 14 appliqué à l'imagerie vibrationnelle Raman, dans lequel l'interaction dans l'échantillon desdits trains d'impulsions pompe et Stokes modulés en amplitude comprend la focalisation des trains d'impulsion dans un volume de focalisation commun et un déplacement relatif du volume de focalisation dans l'échantillon, les premier et deuxième signaux caractéristique de la résonance vibrationnelle moléculaire de l'échantillon étant des signaux bidimensionnels.
